(19)

Europäisches
Patentamt
European
Patent Office
Office européen
des brevets

(11) **EP 1 481 591 B1**

(12) **EUROPEAN PATENT SPECIFICATION**

(45) Date of publication and mention
of the grant of the patent:
**04.07.2007 Bulletin 2007/27**

(51) Int Cl.:
*A23C 9/154* *(2006.01)*    *A23C 9/137* *(2006.01)*
*A23L 1/0522* *(2006.01)*    *A23L 1/0562* *(2006.01)*

(21) Application number: **04076533.1**

(22) Date of filing: **25.05.2004**

(54) **Gelatin and starch containing food**

Gelatine und Stärke enthaltendes Nahrungsmittel

Produit alimentaire contenant de la gélatine et de l'amidon

(84) Designated Contracting States:
**AT BE BG CH CY CZ DE DK EE ES FI FR GB GR
HU IE IT LI LU MC NL PL PT RO SE SI SK TR**

(30) Priority: **26.05.2003 NL 1023537**

(43) Date of publication of application:
**01.12.2004 Bulletin 2004/49**

(73) Proprietor: **Friesland Brands B.V.
7943 PE Meppel (NL)**

(72) Inventors:
• **Tap, Wilhelmus Hendricus Johannes
6604 GA Wijchen (NL)**

• **Heuvelman, Lambertus
7462 DR Rijssen (NL)**
• **van Otterloo, Susan
2834 ZP Amersfoort (NL)**

(74) Representative: **Winckels, Johannes Hubertus F.
et al
Vereenigde
Johan de Wittlaan 7
2517 JR Den Haag (NL)**

(56) References cited:
**EP-A- 0 777 969       WO-A-86/03377
GB-A- 1 323 380**

Printed by Jouve, 75001 PARIS (FR)

**Description**

The invention relates to a gelatin and starch containing food and especially a dessert product. Further, the invention relates to a method for preparing such food, which is typically based on milk.

There is a wide variety of foods that contain gelatin and starch. An important category among them involves thickened products prepared from a liquid, and especially thickened dairy products and dessert products. Such foods and specifically such dairy and dessert products have a gel structure or the structure of a viscous liquid.

A gel structure is obtained by the use of a gelling agent, typically gelatin or a gelling polysaccharide. Organoleptically, gelatin yields fine structures, which structures, however, are suitable solely for gel-like foods. A gelatin-based gel has the advantage that this gel melts in the mouth, whereas gels based, for instance, on carrageen or many other gums, do not do so, or do so to a much lesser extent. The melting of the gel structure plays an important role in mouthfeel, but also has other advantages. Thus, in the case of non-melting gels, the aromas, both odor- and taste-imparting constituents, are perceived less soon. In addition, a non-melting gel mostly, if not always, leads to a crumbly mouthfeel, which is less appealing to many consumers.

A viscous structure is generally prepared starting from starch, with more and more use being made of modified starches. Modified starches are well resistant to the high temperatures and shear forces that a product containing such starches is subject to in modern process equipment. A disadvantage of viscous structures is that the mouthfeel - at the desired visual thickness - is always rather viscous or "heavy". In other words, the visual thickness and the thickness in the mouth are always coupled in the case of viscous structures based on starches and in particular on modified starches.

In this description, a gel structure denotes a structure which does not flow at shearing rates such as they occur upon pouring out, for instance between 0.1 and 100 sec$^{-1}$, that is, at such shearing rates the product remains a gel or divides into fragments. In this description, by the term 'viscous structure' is meant: a structure which flows at shearing rates such as they occur upon pouring out, with the material behaving like a pseudoplastic liquid. In fact, a viscous structure and a pourable structure are synonymous terms in the light of the present invention.

In addition to an optimum mouthfeel, a requirement generally imposed on dairy-based thickened foods and on dairy desserts is that they have a creamy taste; on the part of the consumer, the terms "cream", "dairy" and "milk" are inextricably bound up with each other. From a dietary point of view, however, a lowest possible fat and hence cream content in such foods is desired. An optimum use of fat in general and milk fat in particular in the products according to the present invention is desired.

EP-A-0777969 discloses a composition comprising fat, protein, modified starch and gelatin which is pourable.

The present invention relates to thickened products prepared from a liquid, and specifically thickened dairy products and dessert products, which products are consumed at a temperature lower than the temperature in the mouth, and in particular at a temperature of room temperature at a maximum, that is 25°C at a maximum. Preferably, the products involved are products that are consumed at a temperature between 4°C and 10°C. These products have a structure which is not gelled, but still viscous. In addition, for this structure the visual thickness has been found to be settable independently of the thickness in the mouth.

Surprisingly, it has been found that products having such structures can be obtained by using as thickener a combination of gelatin and modified starch; subjecting the modified starch after the gelatinization of the starch to such a treatment under shear forces that the starch granules are thereby substantially broken; and subjecting the product after cooling, and specifically after flow-cooling, typically to a temperature lower than 20°C and more preferably lower than 15°C, to a stirring treatment for at least half an hour.

More in detail, the invention relates to a method for preparing a product having a non-gelled, viscous aqueous phase, comprising 1-30, more preferably 3.5-20, most preferably 8-12 wt.% of fat; 0.5-6, more preferably 1-5, most preferably 2-4 wt.% of protein, 0.5-5, more preferably 0.7-4, most preferably 1.5-3.5 wt.% of modified starch and 0.3-2.5, more preferably 0.5-2, most preferably 0.7-1.4 wt.% of gelatin; which method comprises:

heating said aqueous phase to a temperature at which the modified starch gelatinizes;
subjecting this aqueous phase with gelatinized modified starch to a treatment with shear forces, and preferably a homogenization treatment, such that upon a microscopic assessment substantially no starch granules or parts of starch granules are visible anymore;
prior to filling and after cooling, stirring the homogenized product for at least half an hour.

All percentages mentioned in this description and the appended claims, unless specified otherwise, are percentages by weight, which are based on the weight of the finished product.

As mentioned, the method according to the invention gives a product of a structure whereby the visual thickness is settable independently of the thickness in the mouth. This can be understood on the basis of viscosity measurements at a temperature of 10°C and 30°C, which temperatures are illustrative of the consumption temperature of the product and the temperature in the mouth, with a Haake viscometer VT 550, measuring body SV1. For a standard Vanillevla (ex Friesche Vlag, Netherlands), at a temperature of 10°C, values (in Pa.s) are found at shearing rates of 10 and 100 (sec$^{-1}$) of 2.99 and 0.59, respectively; and, at a temperature of 30°C, of 2.59 and 0.47, respectively. For the (unwhipped) product according to the invention, at a temperature of 10°C, values are found of 8.84 and 1.75, respectively, and, at a temperature of 30°C, of 2.47 and 0.38, respectively.

More in detail, it has been found that the viscosity at 10°C at a shearing rate of 10 sec$^{-1}$, compared with the viscosity at 30°C at the same shearing rate, as measured with the above-indicated viscometer, is at least a factor of 2 and preferably a factor of 2.5 greater; the same holds for the viscosity at 10°C at a shearing rate of 100 sec$^{-1}$, compared with the viscosity at 30°C.

The stirring step is preferably carried out at a temperature of 2-12°C. Incidentally, this stirring step, which preferably takes 1-8 hours, is also denoted in the description below by the term "cold buffering".

In a preferred embodiment of this method, after stirring, the product is whipped to an overrun percentage of at least 10 wt.%. The term "overrun percentage" is defined as

$$\left[ \frac{\text{(density of the unwhipped product)}}{\text{(density of the whipped product)}} - 1 \right] \times 100\%$$

In fact, by the term overrun percentage, it is indicated that so many gas bubbles are present in the product that the volume of the product, compared with the unwhipped product, increases by the overrun percentage.

Incidentally, whipping can be carried out using any known whipping appliance, for instance by utilizing a Hobart® mixer or continuous whippers such as the Mondomix ® or Tanis®. The upper limit of the overrun percentage depends on the product. For instance, a whipped cream-like product can be obtained with an overrun percentage of 200%, while the product has a relatively low fat content. Fine dessert products are obtained at overrun percentages in the range of 50-100%.

Incidentally, it is not necessary that the product be whipped. For instance, also dessert products having an overrun percentage of 20% at a maximum are obtained which comprise the advantageous properties of the present invention.

In a second aspect, the invention relates to a product comprising a thickened aqueous liquid phase, comprising 1-30, more preferably 3,5-20, most preferably 8-12 wt.% of fat; 0.5-6, more preferably 1-5, most preferably 2-4 wt.% of protein, 0.5-5, more preferably 0.7-4, most preferably 1.5-3.5 wt.% of modified starch and 0.3-2.5, more preferably 0.5-2, most preferably 0.7-1.4 wt.% of gelatin, obtainable by the method according to the invention.

This product typically has a viscosity (Brookfield, spindle 4, 10 rpm, 10°C) in the range of 70-300 Pa.s, more preferably 90-200 Pa.s, most preferably 100-160 Pa.s. Further, the product according to the invention has, for instance, a Stevens firmness (measured at 10°C) of from 18 to 75, more preferably from 30 to 50, measured with a Stevens Texture analyser, with a 1 inch measuring body, a penetration depth of 20 mm and a penetration rate of 1 mm/second, with the samples being filled into 210 gram pots.

In a preferred embodiment, the method and the product according to the invention are based on milk, which has optionally been standardized to a desired protein and milk content. Very suitably, the product according to the invention can be based on whole milk, partly skimmed milk, skim milk, whey and milk permeate.

In addition to, or instead of, milk fat, the product according to the invention can also contain vegetable oils and fats, such as hardened or unhardened coconut oil, palm kernel oil and the like.

Further, additives or processing aids can be used, such as aromas, fruits, nuts, cacao, chocolate particles, coloring agents, bacterial cultures, sweeteners, vitamin and mineral mixes and other conventional processing aids. Incidentally, the bacterial cultures should not render the product acid, that is, ferment the product to obtain a pH lower than 5.5. The reason is that it has been found that under the influence of acid, a gel is formed after all.

The product according to the invention comprises some fat. Specifically when the product to be prepared has a fat percentage that exceeds 1.5 wt.%, and certainly above some 4 wt.%, it is of advantage to use an emulsifier or mixture of emulsifiers. Typically, that emulsifier will be used in an amount of less than or equal to 1 wt.%, based on the finished product. The emulsifier or the mixture of emulsifiers provides for the enhancement of the aggregation of fat; partly for that reason, maximum use is made of the fat content to create as creamy a taste as possible; thus, it becomes possible to obtain as creamy a taste as possible at a lowest possible fat content. Especially when the fat phase comprises milk fat and, more preferably, consists entirely thereof, a pleasant cream taste is obtained. Thus, the skilled person is able to obtain optimum creaminess through the choice of the type of emulsifier. Moreover, advantages during whipping can be obtained when emulsifiers are present.

With the above-described method and composition, it is possible, with the ratio of gelatin and starch, the set the visual thickness and the thickness in the mouth independently of each other. Without wishing to be bound to any theory, it is supposed that the gelatin provides the visual and melting sensation in the mouth. The starch used provides for an increased viscosity in the mouth.

When gelatin alone is used as structure-imparting agent using the method according to the invention, then too thin a product is obtained; the modified starch is added to obtain a more viscous product in the mouth. The non-gelling is obtained by stirring the end product at low temperature for some time.

The use of a gelatin normally leads to gelling; according to the invention, however, gelatin is used to set the viscosity, enabling visually appealing thick products to be made which melt rapidly in the mouth (due to the presence of gelatin). Through this property of the structure, optimum use is made of the fat that is present, and especially the milk fat, and the aromas for contributing to the mouthfeel and the taste sensation.

As follows from Example 5 below, the effect of the invention is also achieved at relatively high fat contents up to, for instance, 30 wt.% of fat based on the final product. Very creamy and rich taste sensations are obtained without a heavy mouthfeel. Even such products with a high fat content are stable during their storage life: they do not exhibit settling or visually perceptible phase separation.

The products according to the invention are typically stable and pourable. "Stable" is here understood to mean that the structure of the product is not adversely affected when stored at a temperature between 0 and 10°C. This means that the viscosity and Stevens firmness of the product do not strongly differ when the product has been stored for some time (a few weeks up to as long as two months) compared with a product just produced. Typically, these properties vary within a range of 20% at most, preferably 10% at most.

In a preferred embodiment, prior to the treatment with shear forces and usually prior to the homogenization step, the product is subjected to a conservatory heating step conventional for thickened water-based products, such as a pasteurization step or sterilization step.

In a preferred embodiment, the basis of the product according to the invention is milk, with an amount of cream being added to obtain the desired creamy taste.

Modified starch is used in an amount sufficient to give the product a desired viscosity in the mouth. Suitable types of modified starch can be selected from those starches that are used in the production of vla ("custard") and comprise, for instance, an H- (adipate-acetate; E1422) or R-(hydroxypropylphosphate; E1442) modification of (waxy) maize, tapioca starch and physically modified starch as well as the above-mentioned types of starch in instant form. Suitable commercial products are, for instance, Clearam CH3010, Clearam CH30, Clearam CR30 (all ex Roquette Freres, France); Amylum E2 (ex Amylum); C*Tex 06203 (ex Cerestar); Purity VL and National Frigex (both ex National Starch); and Novation 2300 and Novation 2600 (both physically modified starches ex National Starch). This starch also makes a contribution to the visual thickness; but this visual thickness is mainly set by the gelatin.

This starch must substantially not be present in the end product in the form of gelatinized starch spheres. This spherical or granular structure must be disturbed or otherwise destroyed.

To that end, the mixture including the modified starch is subjected to a step in which the modified starch is first brought (substantially) in gelatinized form, after which the granular structure is substantially broken. In the obtained products, no or hardly any whole starch spheres are present anymore; starch spheres or parts thereof are substantially not perceptible with a microscope at a 100 x magnification.

Incidentally, the product can also be manufactured by gelatinizing an aqueous solution of the modified starch and to subject it to shear forces, and to put this solution together with the other ingredients and to mix intensively.

The liquid food which is used as starting product in the method according to the invention possesses a continuous aqueous phase.

The step in which the modified starch is brought substantially into the desired form is preferably a homogenization after the starch has gelatinized under the influence of heating. Suitable homogenization pressures are approximately 50 kg/cm$^2$ or approximately 75 kg/cm$^2$, although in fact any pressure above 25 kg/cm$^2$ is usable. However, all other known methods to achieve this result, for instance ultrasonic vibration and microfluidizing, can also be used.

In WO-86/03377 protein-rich soy-based and yogurt-like products are prepared. In these products, modified starch and gelatin are used and gelling is actually promoted. Moreover, acid is added, so that gelling is further enhanced.

Also GB-A-1,323,380 describes in the Examples 8 and 9 two gelled products, a chipolata pudding and a mousse in which gelatin and Perfectamyl AC75-starch are used.

Incidentally, the Dutch patent application 1001689 and the European patent application EP-A-0 777 969 based thereon disclose an aerated acid food in which a gas is introduced up to an overrun percentage of at least 25%. In this aerated, acid (pH 3.0-5.2) food, modified starch adapted to acid conditions is used which has been treated similarly to the starch that is used according to present invention.

Avoiding the gel structure as required according to the present invention is not described or suggested. Gelatin is used (in the Examples in amounts of 0.2 wt.%), because it has the advantage of not having formed any gel yet when being filled but doing so upon cooling in the package and then making a contribution to the yield stress. What the cold buffer treatment of the present method leads to is that the higher amounts of gelatin that are used according to the invention do not form a gel. Moreover, the homogenized starch makes a contribution to the reduced tendency of gelatin to gelling.

The gelatin, since it melts in the mouth, will make little contribution to the perceived thickness in the mouth but will make a contribution to the visual thickness. Desserts are generally consumed at a temperature between 5 and 15°C and at this temperature gelatin is not molten. The gelatin that is used according to the invention can in fact be any gelatin suitable for use in foods, for instance gelatin originating from bones, cattle skins, porc rind and the like; gelatins prepared according to the acid as well as according to the calcium process are satisfactory. For instance, and preferably so, however, gelatins having a bloom number between 80 and 300 are used; more preferably, the lower limit is above 100 and most preferably above 150.

Emulsifier can be added not only for its effect on creaminess, but also to make it easier to whip the product.

To the product according to the invention, conventional processing aids for vla ("custard") and yoghurt products can be added. Thus, sugar, aroma and color are used to give the product the desired taste and color; further, both sweet and sour products can be prepared, on the condition that not so much acid is added that gelling occurs after all, which means, as a rule, that the pH should not be lower than pH 5.5. In addition, it is possible, directly after stirring, or after whipping, to add to the product a thick-liquid ingredient possibly with solid particles, and to distribute this in the product with, for instance, a static mixture. A suitable thick-liquid ingredient can be a fruit pulp, a viscous liquid with chocolate bits and/or bits of nut. In this connection, incidentally, the viscous liquid may contain whole starch granules without the particular structure of the food according to the invention being undone, at least without being very adversely affected.

In the method according to the invention, use can be made of standard equipment for vla preparation.

In a preferred embodiment, emulsifier, if used, is first added to warm cream, or another warm fat fraction, to allow this emulsifier to melt. Next, the emulsifier is properly distributed in the warm fat fraction, for instance with a high-speed mixer or emulsifying apparatus, such as an Ystral. The other ingredients are added to the cold liquid phase, after which optionally the emulsifier is added. Incidentally, it is also possible for all ingredients for the product according to the invention to be put together and then to be heated as a whole to a temperature of, for instance, 70°C or higher. Certainly if no warm fat fraction needs to be added, all ingredients can be added to the starting liquid phase, and usually to the, possibly standardized, milk. The ingredients essential according to the invention dissolve as a matter of course in the following stages of the method which is carried out for the preparation of the product according to the invention.

After this, there follows a heating on, for instance, a direct heating system, whereby in a first heater the product is brought to 60-80°C and subsequently, in a high-heater, the product is heated with steam to a temperature of approximately 110 to 130°C. Optionally, ingredients can also be added after the first heating step. At the temperature of about 110-130°C, the product is kept hot for 5 to 30 seconds to allow the starch to gelatinize completely, after which, in, for instance, a flash cooler (under reduced pressure) or on plate cooler, the temperature of the product is adjusted to some 65-80°C, for instance to 70°C.

Next, the modified starch is brought into the desired form by subjecting it to shear forces, as by carrying out a homogenization step. The starch is thereby comminuted to such an extent that microscopically no visible spheres or large fragments occur anymore. The homogenization step can be carried out with the aid of a high-pressure homogenizer, as of the make Ranny, at a pressure between 5 and 100 bar. Both single-stage and two- or multi-stage homogenization are possible. After this, the product is cooled while flowing, to a temperature between 2 and 12°C, as 7°C.

When the product is now directly whipped or packaged (for an unwhipped product), what is formed then is not the desired liquid structure but a gelled structure.

To obtain the desired structure, the product is further buffered for at least 30 minutes, but typically for 1 to 8 hours at a temperature between 2 and 15°C and more preferably between 5 and 10°C, in a tank where the product is kept moving with a mixer.

The stirring intensity is here such that the whole product remains in motion and no air is beaten in. After this treatment, the desired, viscous, non-gelled structure arises. In other words, a little stirring is enough as long as the whole product remains in motion. This is achieved, for instance, by choosing a large mixer with a low speed, for instance a gate mixer. Intensive stirring with a high-speed mixer, a small mixing blade with high speed is less suitable.

This product can now be filled, for instance as an unwhipped dessert product. It is also possible, while preserving the desired structure, to whip the product to an overrun of 10 to 100%.

Such whipping, as mentioned, can take place with a continuous whipping apparatus such as Mondomix / Tanis continuous whipper. The whipped product is subsequently filled.

Prior to filling, it is possible to add a viscous liquid with possibly solid particles, for instance to make a product with fruit, chocolate or bits of nut.

The invention will presently be described in more detail in and by the following non-limiting examples.

Example 1: The influence of homogenizing and buffering with stirring.

The following composition was tested (percentages by weight):

|  | 1 |
|---|---|
| Skim milk | 96.5 |
| Modified waxy maize starch (Roquette) | 2.0 |
| Gelatin 160 bloom | 1.5 |

In 4 charges, milk and gelatin were mixed and heated up to 65°C, after which the modified waxy maize starch was added. This mixture was heated on a small tubular pasteurizer to 125°C with a hold-warm time of 10 sec and cooled to 70°C.

One of the charges was subsequently cooled while flowing, to 7°C. A very firm gel was obtained.

The second charge was cooled while flowing, to 7°C, and then stirred for 1 hour at this temperature. A rather firm gel was obtained.

The third charge was homogenized at 70°C at 75 bar and then cooled while flowing, to 7°C. A firm gel was obtained.

The fourth charge was homogenized at 70°C at 75 bar, then cooled while flowing to 7°C , and then stirred for 1 hour at this temperature. This method was in accordance with the invention and yielded a very viscous liquid having at best a very slight gel character.

As appears from the above results, when by the standard method the product is made (1), a firm gel is obtained. Just buffering with stirring at low temperature (2) reduces the gel character somewhat, but it remains a gel.

When homogenization but no buffering with stirring is done (3), a firm gel is formed. Only the combination of homogenization and cold buffering with stirring yields the desired thick-liquid structure.

Example 2: Influence of starch and gelatin content..

Both with the dosage of gelatin and with the dosage of starch, the structure can be set. The following recipe was used as a basis for these variants:

| Cream 40% fat | 10% |
|---|---|
| Sugar | 7% |
| Maltodextrin, DE 20 | 2 % |
| Modified (waxy) maize starch | see Table below |
| Gelatin 220 bloom | see Table below |
| Emulsifier | 0.4% |
| Color and flavor | 0.064 % |
| Skim milk | balance to 100% |

The following 5 variants were prepared:

|  | 2.2% mod. st. | 2.45% mod.st. | 2.7% mod. st |
|---|---|---|---|
| 0.85% gelatin | 1 | 2 | 3 |
| 1.2% gelatin | 4 | 5 |  |

The variant were made according to the following procedure. As heating equipment, Sterilab (direct heating system) was used, and the product was heated at 125°C for 10 sec. The products were homogenized at 70°C at a pressure of 75 bar. After the products had been cooled while flowing, they were buffered with stirring at a temperature of 7°C for 4 hours.

In part, the product was then filled, while another part was whipped on the Mondomix to an overrun of 25%.

The viscosity was determined with the above-described Haake rotation viscometer at 10°C and a shearing rate (D) of 10 sec$^{-1}$.

Measured viscosities (viscosity in Pa.s measured at 10°C and a D of 10 sec$^{-1}$) are listed in the following two Tables:

| Unwhipped product: | | | |
|---|---|---|---|
| | 2.2% mod. starch | 2.45% mod. starch | 2.7% mod. starch |
| 0.85% gelatin | 1.4 | 1.8 | 2.2 |
| 1.2% gelatin | 2.9 | 3.8 | |

| Whipped product: | | | |
|---|---|---|---|
| | 2.2% mod. starch | 2.45% mod. starch | 2.7% mod. starch |
| 0.85% gelatin | 1.9 | 2.0 | 2.3 |
| 1.2% gelatin | 3.0 | 4.4 | |

Both the unwhipped and the whipped variants exhibited the desired non-gelled structure, the structure varying from fairly low viscous to fairly high viscous and spoonable.

The above measurements show that gelatin has much effect on product firmness and that starch has a much more limited effect on that.

The assessment showed that the thickness that is visually perceived can be set especially with the gelatin content, whereas the viscosity in the mouth is settable with modified starch.

Example 3: The influence of the emulsifier.

In the following basic compositions, three emulsifier types were tested:

| | |
|---|---|
| Skim milk | 64.4% |
| Cream 40% | 20.0% |
| Sugar | 11.0 % |
| Maltodextrin DE 20 | 2.0% |
| Modified waxy maize starch | 1.0% |
| Gelatin 230 bloom | 1.2% |
| Emulsifier | 0.4% |

The samples were prepared according to the invention as described in Example 1, with the following adaptations. The emulsifier was added in warm cream (temperature 60°C ); which cream was put together with the milk fraction. After 4 hours of cold buffering with stirring, these were whipped with the Mondomix to an overrun of 50%.

The firmness was measured with the Stevens Texture analyser (1 inch measuring body; penetration depth 20 mm, penetration rate 1 mm/second, filling in 500 gram pots), the viscosity conform the procedure mentioned in Example 2; the results are in the following table:

| Variant | | Stevens Firmness gram | Viscosity (Pa.s) |
|---|---|---|---|
| 1 | Without emulsifier | 46 | 4.0 |
| 2 | 0.4% Admul GLP 2033 | 31 | 3.4 |
| 3 | 0.4% Hymono 1103 | 34 | 5.8 |
| 4 | 0.4% Hymono 9004 | 53 | 8.7 |

The emulsifiers used, all ex Quest International, are a saturated mono- and diglyceride (Hymono 1103; E471), a lactic acid ester of a mono- and diglyceride (Admul GLP 2033; E472b) and an unsaturated mono- and diglyceride (Hymono 9004; E471).

These firmness figures show that without emulsifier the firmness is somewhat higher than in the use of the emulsifiers Hymono 1103 or Admul GLP 2033. Hymono 9004 has been found to actually increase the firmness.

In the assessment, the variant without emulsifier proved to be somewhat more gelled than the variants with Hymono 1103 or Admul GLP 2033. The variant with Hymono 9004 proved not to be gelled; here, extra firmness is obtained through the aggregation of the fat, whereby this fat is going to make a contribution to the structure.

This experiment showed that the emulsifier has some influence on the structure; it renders the product less gelled. If an emulsifier is used which strongly promotes the aggregation of fat globules, then this leads to extra fat coarsening, which becomes manifest in a creamier taste and firmer structure.

Example 4: Testing emulsifiers in an end product.

The three emulsifier types used in Example 3 were presently tested in a dosage of 0.4% in two compositions: a composition according to the invention and a second composition, also according to the invention, in which the percentages of modified starch and gelatin have been adjusted at the expense of the amount of skim milk, as indicated in the following table. The test set-up was as follows:

|  | Mod. Waxy maize: 1.2%<br>Gelatin 230 Bloom 1.2% | Mod. waxy maize: 2.2 %<br>Gelatin 230 bloom: 0.85% |
| --- | --- | --- |
| Hymono 1103 (Quest) | 1 | 4 |
| Admul GLP 2033 (Quest) | 2 | 5 |
| Hymono 9004 (Quest) | 3 | 6 |

The products were prepared in the manner according to the invention as described in Example 2; including the homogenization step and cold buffering with stirring. A part of the products was filled directly after the buffering step; a part was whipped with Mondomix to an overrun of 25%.

Here, too, the emulsifier proved to have some influence on the structure of the whipped products. Both variant 3 and variant 6 were clearly more viscous (fine thick-liquid) and these variants exhibited a more creamy taste compared with the other variant.

CSLM-recordings (Cofocal Scanning Laser Microscopy) showed that the emulsifiers influenced the fat coarsening in different ways. Hymono 9004 entailed more fat aggregation and this led to a more creamy mouthfeel (at the same fat content).

After 1, 2 and 3 weeks' storage in the cold store, these products were assessed for structure and air bubble size. It appears that the structure does not change over the 3-week storage period; the size of the air bubbles increases very slightly during these three weeks (but is still very fine).

Example 5: The influence of the fat content

Also with relatively high fat contents is it possible to obtain the characteristic structure. The following recipe was used as a basis for these variants:

| | |
| --- | --- |
| Sugar | 8% |
| Maltodextrin, DE 20 | 2% |
| Emulsifier* | 0.4% |
| Flavor | 0.004% |
| Cream 40% fat | see table below |
| Modified (waxy) maize starch | see table below |
| Gelatin 220 bloom | see table below |
| Skim milk | balance to 100% |
| * saturated mono- and diglycerides of fatty acids (E471). | |

| Variant | 1 | 2 | 3 |
|---|---|---|---|
| Cream 40% fat | 25% | 25% | 50% |
| Modified (waxy) maize starch | 1.5% | 1% | 0.8% |
| Gelatin 220 bloom | 1.2% | 1.2% | 1% |

The variants were made according to the procedure described in Example 2 except that the resulting end product was whipped with the aid of the Mondomix to an overrun of 100%.

The higher overrun of 100% and the choice of higher fat contents (10 and 20%, respectively) result in a rich though light product structure which is thick-viscous.

The viscosity and Stevens firmness were measured as described in Example 2 and Example 3, respectively.

| Variant | Viscosity $\eta_{10}$ (Pa.s) | Firmness g (1 day after whipping) |
|---|---|---|
| 1 | 7.22 | 52 |
| 2 | 6.18 | 55 |
| 3 | 12.90 | 110 |

The assessment shows that the amount of fat is of influence on the viscosity and the prevention of gelling of the end product. Especially the variant 3 proves to give a very creamy and rich taste sensation without a heavy mouthfeel.

This experiment showed that it is very well possible to realize the characteristic structure described in the foregoing in products having higher fat contents, viz. 10 and 20%, respectively. It proves equally possible to whip these products to an overrun of 100% and to keep them stable during their storage life without settling or - visually perceptible - phase separation.

**Claims**

1. A method for preparing a product having a non-gelled, viscous aqueous phase, comprising 1-30 wt.% of fat; 0.5-6 wt.% of protein; 0.5-5 wt.% of modified starch and 0.3-2.5 wt.% of gelatin; which method comprises:

   heating said aqueous phase to a temperature at which the modified starch gelatinizes;
   subjecting this aqueous phase with gelatinized modified starch to a treatment with shear forces, such that upon a microscopic assessment substantially no starch granules or parts of starch granules are visible anymore;
   prior to filling and after cooling, stirring the shear force-treated product for at least half an hour.

2. A method according to claim 1, wherein as treatment with shear forces a homogenization treatment is carried out.

3. A method according to claim 2, wherein a homogenization pressure between 25 and 150 bar is used.

4. A method according to any one of claims 1 or 2, wherein the stirring step is carried out at a temperature of 2-15°C.

5. A method according to any one of the preceding claims, wherein the product, prior to the stirring step, is cooled while flowing.

6. A method according to any one of the preceding claims, wherein after stirring, the product is whipped to an overrun percentage of at least 10 wt.%.

7. A product comprising a non-gelled thickened aqueous liquid phase, comprising 1-30, more preferably 3.5-20, most preferably 8-12 wt.% of fat; 0.5-6, more preferably 1-5, most preferably 2-4 wt.% of protein; 0.5-5, more preferably 0.7-4, most preferably 1.5-3.5 wt.% of modified starch and 0.3-2.5, more preferably 0.5-2, most preferably 0.7-1.4 wt.% of gelatin, obtainable by the method according to any one of the preceding claims.

8. A product according to claim 7, wherein the aqueous liquid phase is based on milk.

9. A product according to claim 7 or claim 8, comprising up to 1 wt.% of an emulsifier or mixture of emulsifiers.

**Patentansprüche**

1. Verfahren zur Herstellung eines Produkts mit einer nicht gelierten, viskosen wäßrigen Phase, umfassend 1 bis 30 Gew.% Fett, 0,5 bis 6 Gew.% Protein, 0,5 bis 5 Gew.% modifizierte Stärke und 0,3 bis 2,5 Gew.% Gelatine; wobei das Verfahren umfaßt:

   Erwärmen der wäßrigen Phase auf eine Temperatur, bei der die modifizierte Stärke geliert,
   Unterziehen dieser wäßrigen Phase mit gelierter modifizierter Stärke einer Behandlung mit Scherkräften, so daß bei einer mikroskopischen Untersuchung im wesentlichen keine Stärkekörnchen oder Teil von Stärkekörnchen mehr sichtbar sind,
   wenigstens halbständiges Rühren des mit Scherkräften behandelten Produkts vor dem Abfüllen und nach dem Abkühlen.

2. Verfahren gemäß Anspruch 1, wobei als Behandlung mit Scherkräften eine Homogenisierungsbehandlung durchgeführt wird.

3. Verfahren gemäß Anspruch 2, wobei ein Homogenisierungsdruck zwischen 25 und 150 bar verwendet wird.

4. Verfahren gemäß einem der Ansprüche 1 oder 2, wobei der Rührschritt bei einer Temperatur von 2 bis 15°C durchgeführt wird.

5. Verfahren gemäß einem der vorstehenden Ansprüche, wobei das Produkt vor dem Rührschritt unter Fließen gekühlt wird.

6. Verfahren gemäß einem der vorstehenden Ansprüche, wobei das Produkt nach dem Rühren zu einem Überschußprozentsatz von wenigstens 10 Gew.% geschlagen wird.

7. Produkt umfassend eine nicht gelierte verdickte wäßrige flüssige Phase, umfassend 1 bis 30, mehr bevorzugt 3,5 bis 20, am meisten bevorzugt 8 bis 12 Gew.% Fett; 0,5 bis 6, mehr bevorzugt 1 bis 5, am meisten bevorzugt 2 bis 4 Gew.% Protein; 0,5 bis 5, mehr bevorzugt 0,7 bis 4, am meisten bevorzugt 1,5 bis 3,5 Gew.% modifizierter Stärke und 0,3 bis 2,5, mehr bevorzugt 0,5 bis 2, am meisten bevorzugt 0,7 bis 1,4 Gew.% Gelatine, erhältlich durch das Verfahren gemäß einem der vorstehenden Ansprüche.

8. Verfahren gemäß Anspruch 7, wobei die wäßrige flüssige Phase auf Milch basiert.

9. Produkt gemäß Anspruch 7 oder Anspruch 8, umfassend bis zu 1 Gew.% eines Emulgators oder einer Mischung von Emulgatoren.

**Revendications**

1. Procédé de préparation d'un produit ayant une phase aqueuse visqueuse non gélifiée, comprenant 1 à 30% en poids de graisse ; 0,5 à 6% en poids de protéine ; 0,5 à 5% en poids d'amidon modifié et 0,3 à 2,5% en poids de gélatine ; lequel procédé consiste à :

   - chauffer ladite phase aqueuse à une température à laquelle l'amidon modifié gélatinise ;
   - soumettre cette phase aqueuse contenant de l'amidon modifié gélatinisé à un traitement par des forces de cisaillement, de sorte que lors d'une évaluation microscopique pratiquement plus de granules d'amidon ou parties de granules d'amidon ne soient visibles ;
   - avant remplissage et après refroidissement, agiter le produit traité par des forces de cisaillement pendant au moins une demi-heure.

2. Procédé selon la revendication 1, dans lequel le traitement par des forces de cisaillement effectué est un traitement d'homogénéisation.

3. Procédé selon la revendication 2, dans lequel une pression d'homogénéisation comprise entre 25 et 150 bars est utilisée.

**4.** Procédé selon l'une quelconque des revendications 1 ou 2, dans lequel l'étape d'agitation est effectuée à une température comprise entre 2 et 15°C.

**5.** Procédé selon l'une quelconque des revendications précédentes, dans lequel le produit, avant l'étape d'agitation, est refroidi pendant qu'il s'écoule.

**6.** Procédé selon l'une quelconque des revendications précédentes, dans lequel après agitation, le produit est fouetté afin d'obtenir un pourcentage de foisonnement d'au moins 10% en poids.

**7.** Produit comprenant une phase liquide aqueuse épaissie non gélifiée, comprenant 1 à 30, plus préférablement 3,5 à 20, de façon la plus préférée 8 à 12% en poids de graisse ; 0,5 à 6, plus préférablement 1 à 5, de façon la plus préférée 2 à 4% en poids de protéine ; 0,5 à 5, plus préférablement 0,7 à 4, de façon la plus préférée 1,5 à 3,5% en poids d'amidon modifié et 0,3 à 2,5, plus préférablement 0,5 à 2, de façon la plus préférée 0,7 à 1,4% en poids de gélatine, pouvant être obtenu à l'aide du procédé selon l'une quelconque des revendications précédentes.

**8.** Produit selon la revendication 7, dans lequel la phase liquide aqueuse est à base de lait.

**9.** Produit selon la revendication 7 ou la revendication 8, comprenant jusqu'à 1% en poids d'un émulsifiant ou d'un mélange d'émulsifiants.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0777969 A
- WO 8603377 A
- GB 1323380 A
- NL 1001689